(19) Europäisches Patentamt / European Patent Office / Office européen des brevets

(11) **EP 4 632 321 A1**

(12) **EUROPEAN PATENT APPLICATION**
published in accordance with Art. 153(4) EPC

(43) Date of publication:
**15.10.2025   Bulletin 2025/42**

(21) Application number: **23900261.1**

(22) Date of filing: **04.09.2023**

(51) International Patent Classification (IPC):
**G01C 3/06** (2006.01)        **G01C 3/00** (2006.01)
**G06T 7/593** (2017.01)

(52) Cooperative Patent Classification (CPC):
**G01C 3/00; G01C 3/06; G06T 7/593**

(86) International application number:
**PCT/JP2023/032211**

(87) International publication number:
**WO 2024/122135 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **08.12.2022   JP 2022196351**

(71) Applicant: **Astemo, Ltd.**
**Chiyoda-ku,**
**Tokyo 1000004 (JP)**

(72) Inventor: **YAMAZAKI Kazuyoshi**
**Tokyo 100-8280 (JP)**

(74) Representative: **Strehl & Partner mbB**
**Maximilianstrasse 54**
**80538 München (DE)**

(54)    **IMAGE PROCESSING DEVICE AND IMAGE PROCESSING METHOD**

(57)    An image processing device includes: an image comparison unit that compares a first image detected by a first image sensor built in a first camera with a second image detected by a second image sensor built in a second camera, the first image and the second image being inputted from a stereo camera, and that calculates a correction process coefficient for correcting the second image, based on a difference between the first image and the second image in a second direction different from the first direction; and an image processing unit that corrects the second image, using the correction process coefficient calculated by the image comparison unit.

FIG. 1

EP 4 632 321 A1

## Description

Technical Field

The present invention relates to an image processing device and an image processing method.

Background Art

A conventional stereo camera technology has been known for years as a three-dimensional object recognition technology. The stereo camera technology is a technology by which a parallax is detected based on trigonometry, using a difference in ways images are captured, the images being taken by two cameras (which are referred to as "stereo camera") arranged at different positions, and using this parallax, the depth and the position of an object are detected. By using the stereo camera technology, the position of the object can be accurately detected. The stereo camera technology is thus applied to a case where a three-dimensional object is detected and recognized by in-vehicle cameras or cameras incorporated in on a robot. Images from the two cameras of the stereo camera are converted into given projections by, for example, a central projection method, and, by detecting a difference between the projections of the images, a distance to the object can be measured.

When highly accurate distance detection is carried out, it requires that the two images be highly accurately aligned with the given projections. Therefore, for example, if an image taken by the camera changes due to a temperature change or a time-dependent change of the camera or its lens, an error in measurement of the distance to the object, i.e., a distance measurement error occurs. For example, in the case of a plastic lens, which is advantageous in cost reduction and aspherical configuration, its detection image changes under the influence of a temperature change. A temperature change of the plastic lens thus results in the occurrence of a distance measurement error. In the case of a fisheye lens offering a wide field of view, the fisheye lens being a glass lens, a change in an image in a wide field of view is greater, which leads to the occurrence of a distance measurement error.

Techniques disclosed in PTLs 1 and 2 described below are known as techniques for dealing with the problem of the distance measurement error caused by a temperature change of the lens. For example, PTL 1 includes this description: "A camera information storage unit has pieces of camera information that change depending on a state of zooming and of focusing of each image-capturing means, the camera information corresponding to the state of zooming and of focusing, and a stereo image processing unit acquires the state of zooming and of focusing of each image-capturing means, acquires camera information corresponding to the state of zooming and of focusing, from the camera information storage means, and uses the acquired camera information for stereo image processing.".

PTL 2 includes this description: "Based on a temperature detected by the temperature sensor, a distortion correction processing unit reads a correction coefficient from a correction coefficient storage unit, the correction coefficient minimizing an index value (shift amount) indicating a degree of distortion of an image taken at the detected temperature, and carries out a distortion correction process by a distortion correction formula, using the read correction coefficient.".

Citation List

Patent Literature

PTL 1: JP 2008-241491 A
PTL 2: JP 2012-147281 A

Summary of Invention

Technical Problem

PTL 1 states that with respect to an image shift resulting from expansion/contraction or structural change of a lens caused by a temperature change, temperature information on first and second image-capturing units is acquired and that by acquiring correction information corresponding to the image shift, together with camera information, from the camera information storage unit, a change in the camera information caused by a temperature difference can be corrected. According to the process described in PTL 1, however, temperature-dependent correction information is stored in a storage device. This increases the storage capacity of the storage device, thus creating a problem of the larger cost of the storage device. In addition, when a distortion of an image taken by a camera is corrected, correction information is read from the storage device. A storage device handling information on two cameras, therefore, must be provided in advance. In particular, to achieve a high resolution and a wide field of view, a three-dimensional measuring device is equipped with a camera with a larger number of pixels. Under such circumstances, an amount of information, such as correction information, has been increasing continuously and therefore the storage capacity of the storage device needs to be increased as well.

Meanwhile, an image processing device described in PTL 2 offers a means to deal with the increasing storage capacity, which is the problem PTL 1 poses. The image processing device reduces the amount of data stored in the storage device by using a polynomial distortion correction formula. However, while being successful in reducing the storage capacity of the storage device, the image processing device described in PTL 2 still faces the same problem the device of PTL 1 faces: a storage device handling information on two cameras must be provided in advance.

Furthermore, the techniques described in PTLs 1 and 2 have another serious problem related to correction accuracy. Each of a temperature detected by a temperature detection unit described in PTL 1 and a temperature detected by a temperature sensor described in PTL 2 does not directly indicate a temperature of the lens. For example, when the lens is exposed to sunlight or the heat of a camera processing circuit is transmitted to the lens, the internal temperature and the external temperature of the lens become different from each other. In this case, with an additional problem that the temperatures of two cameras are different from each other, an error may occur when images detected by the two cameras are corrected. In addition, the actual temperature characteristics of the lens vary, and the lens does not always show the same characteristics when experiencing the same temperature change. For these reasons, detecting a change in an image from a temperature change is difficult. In addition, a change in the temperatures of the two cameras results in a change in the sensitivities of sensors built in the cameras, in which case images detected respectively by the sensors are different from each other.

The present invention has been conceived in view of such circumstances, and an object of the present invention is to correct images outputted from two cameras in correspondence to a change in a stereo camera (two cameras).
Solution to Problem

An image processing device according to the present invention includes: an image comparison unit that compares a first image detected by a first image sensor built in a first camera with a second image detected by a second image sensor built in a second camera, the first image and the second image being inputted from a stereo camera including the first camera and the second camera lined up in a first direction, and that calculates a correction process coefficient for correcting the second image, based on a difference between the first image and the second image in a second direction different from the first direction; and an image processing unit that corrects the second image, using the correction process coefficient calculated by the image comparison unit.

Advantageous Effects of Invention

According to the present invention, images outputted from two cameras can be corrected in correspondence to a change in a stereo camera (two cameras).

Problems, configurations, and effects that are not described above will be made clear by the following description of embodiments.

Brief Description of Drawings

[FIG. 1] FIG. 1 is a block diagram showing an example of an internal configuration of an image processing device according to a first embodiment of the present invention.
[FIG. 2] FIG. 2 is a diagram for explaining a correction algorithm according to the first embodiment of the present invention.
[FIG. 3] FIG. 3 depicts a change in an image on a sensor, the change resulting from a temperature change, according to the first embodiment of the present invention.
[FIG. 4] FIG. 4 shows diagrams for explaining a method of correcting a difference in change between two lenses according to the first embodiment of the present invention.
[FIG. 5] FIG. 5 is a graph showing the k dependency of a magnification error signal MES according to the first embodiment of the present invention.
[FIG. 6] FIG. 6 depicts a relationship in component position between a lens and a sensor according to the first embodiment of the present invention.
[FIG. 7] FIG. 7 depicts an effect of correction of an image height displacement amount and a difference in image height displacement amount in a case where a second image sensor moves in a Y direction, according to the first embodiment of the present invention.
[FIG. 8] FIG. 8 depicts an effect of correction of an image height displacement amount and a difference in image height displacement amount in a case where the second image sensor rotates around a Y-axis serving as a rotation axis, according to the first embodiment of the present invention.

[FIG. 9] FIG. 9 depicts an effect of correction of an image height displacement amount and a difference in image height displacement amount in a case where the image height displacement amount changes non-linearly with respect to a vertical angle of view, according to the first embodiment of the present invention.

[FIG. 10] FIG. 10 depicts an example of vertical displacement of an image height at different positions in the horizontal direction, the vertical displacement occurring at a first lens and a second lens, according to the first embodiment of the present invention.

[FIG. 11] FIG. 11 depicts examples of various areas detected by two sensors, the areas being used for calculation of MES, according to the first embodiment of the present invention.

[FIG. 12] FIG. 12 is a block diagram showing an example of a hardware configuration of a computer according to the first embodiment of the present invention.

[FIG. 13] FIG. 13 is a flowchart showing an example of processing by the image processing device according to the first embodiment of the present invention.

[FIG. 14] FIG. 14 is a block diagram showing an example of an internal configuration of an image processing device according to a second embodiment of the present invention.

[FIG. 15] FIG. 15 is a block diagram showing an example of an internal configuration of an image processing device according to a third embodiment of the present invention.

[FIG. 16] FIG. 16 is a block diagram showing an example of an internal configuration of an image processing device according to a fourth embodiment of the present invention.

Description of embodiments

Embodiments of the present invention will hereinafter be described with reference to the accompanying drawings. In this specification and drawings attached thereto, constituent elements that are substantially the same in function or configuration are denoted by the same reference signs to omit redundant description. The present invention can be applied to, for example, a computing device for controlling vehicles, with which an advanced driver assistance system (ADAS) or an in-vehicle electronic control unit (ECU) for autonomous driving (AD) can communicate.

[First Embodiment]

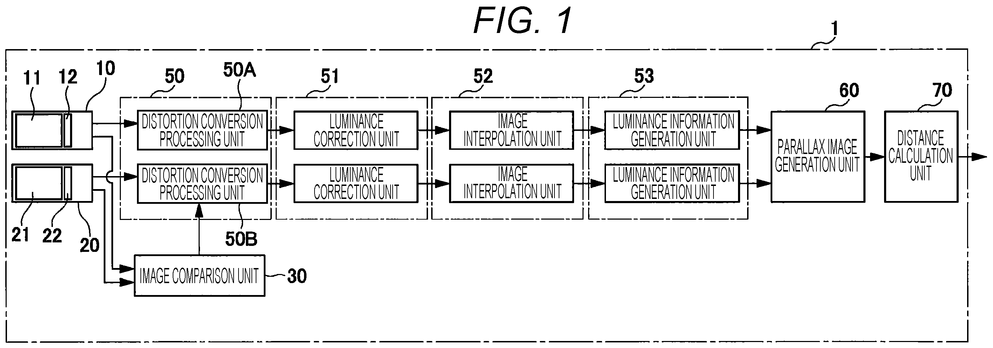

FIG. 1 is a block diagram showing an example of an internal configuration of an image processing device 1 according to a first embodiment of the present invention.

The image processing device 1 carries out a given process on an image inputted from a stereo camera including a first camera (first camera 10) and a second camera (second camera 20) lined up in a first direction. In this stereo camera, the first camera 10 and the second camera 20 are lined up in a horizontal direction (first direction).

The first camera 10 includes a first lens 11 and a first image sensor 12. The first camera 10 detects an image of an object by the first image sensor 12 where light passing through the first lens 11 forms an image. A first image detected by the first image sensor (first image sensor 12) included in the first camera (first camera 10) is subjected to given processes by functional units in rear stages.

The second camera 20 includes a second lens 21 and a second image sensor 22. The second camera 20 detects an image of the object by the second image sensor 22 where light passing through the second lens 21 forms an image. A second image detected by the second image sensor (second image sensor 22) included in the second camera (second camera 20) is subjected to given processes by functional units in rear stages.

In the following description, when the first lens 11 and the second lens 21 are not distinguished from each other, these lenses are collectively referred to as "lens". Similarly, when the first image sensor 12 and the second image sensor 22 are not distinguished from each other, these sensors are collectively referred to as "sensor". The first camera 10 and the second camera 20 may be collectively referred to as "two cameras". The first image detected by the first image sensor 12 may be referred to as a "first image detected by the first camera 10". Similarly, the second image detected by the second image sensor 22 may be referred to as a "second image detected by the second camera 20".

The first image detected by the first camera 10 is inputted to a distortion conversion processing unit 50A, and the distortion conversion processing unit 50A converts a distortion of the first image.

The second image detected by the second camera 20 is inputted to a distortion conversion processing unit 50B. The distortion conversion processing unit 50B then converts a distortion of the second image.

In the following description, when the distortion conversion processing units 50A and 50B are not distinguished from each other, they are collectively referred to as a distortion conversion processing unit 50. An image processing unit according to the first embodiment is a distortion conversion processing unit (distortion conversion processing unit 50) that converts a distortion of the first image and a distortion of the second image. For example, when a lens projection method is orthogonal projection (fsinθ), the distortion conversion processing units 50A and 50B carry out projection conversion to convert the first image and the second image, from orthogonal projection images to central projection (ftanθ) images, respectively, thereby converting respective distortions of the first image and the second image. However, even if images different from the central projection (ftanθ) images result after the projection conversion, an effect of the present invention can be obtained.

Now, for example, when the temperature of the second lens 21 of the second camera 20 changes relative to the temperature of the first lens 11 of the first camera 10, a magnification of the second image changes relative to a magnification of the first image. In addition, even when the temperatures of the first lens 11 of the first camera 10 is equal to the temperature of the second lens 21 of the second camera 20, if sensitivity of the first lens 11 of the first camera 10 in temperature-dependent magnification change is different from sensitivity of the second lens 21 of the second camera 20 in temperature-dependent magnification change, it also leads to a change in the magnification of the second image relative to the magnification of the first image. To deal with this problem of magnification change, the image processing unit (distortion conversion processing unit 50B) corrects the second image by a correction process coefficient k calculated by an image comparison unit (image comparison unit 30). Correcting the second image by the correction process coefficient k is a process of correcting a change in the magnification of the second image.

In a rear stage to the two cameras, the image comparison unit 30 is provided. The first image from the first camera 10 and the second image from the second camera 20 are both inputted to the image comparison unit 30.

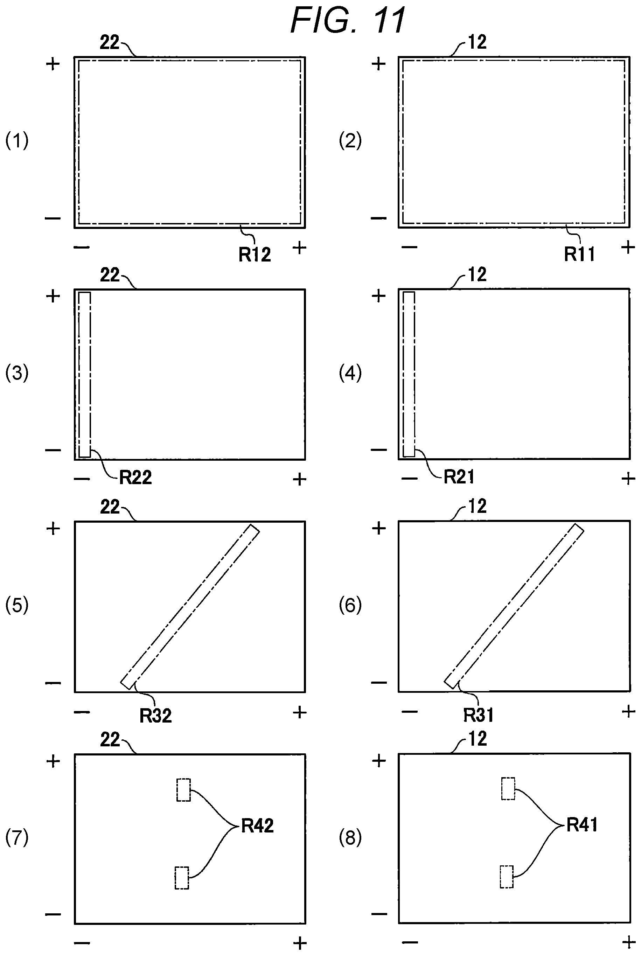

The image comparison unit 30 compares the first image with the second image, and calculates the correction process coefficient k for correcting the second image, based on a difference between the first image and the second image in a second direction different from the first direction. In this embodiment, a substantially horizontal direction in which the two cameras are lined up is defined as a first direction, and a substantially vertical direction that is vertical with respect to the first direction is defined as the second direction. However, the second direction is not limited to the substantially vertical direction and may be a direction set by tilting the horizontal direction by about 45 degrees, which will be described later (see (5) and (6) in FIG. 11).

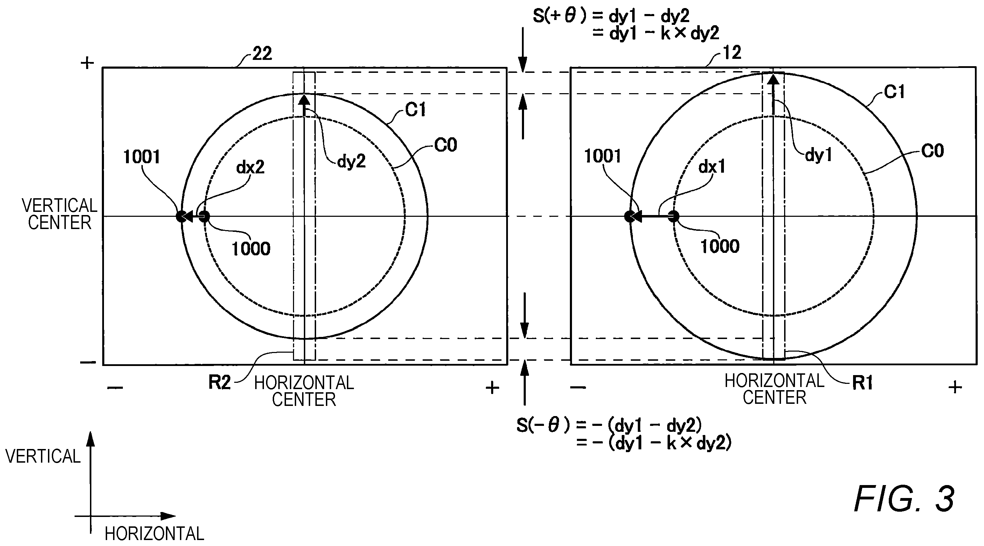

The image comparison unit 30 compares the first image with the second image in a direction substantially perpendicular to the direction in which the two cameras are lined up, and outputs a comparison result to the distortion conversion processing unit 50B. In this embodiment, the image size of the second image can be corrected by multiplying the whole second image by a given magnification that is the correction process coefficient k. This means that the image size of a given area of the second image being different from that of the given area of the first image is equivalent to the magnification of the second image being different from that of the first image. Thus, to calculate the correction process coefficient k, the image comparison unit 30 extracts an area of a given size from the first image and from the second image. The size of the extracted area may be the size of a part of the image, which is an object commonly appearing in the two images, as shown in FIG. 3 to be described later, or may be the size of the whole image, i.e., the size of each of the two images, as shown in (1) and (2) of FIG. 11 to be described later.

It is assumed in this case that the areas extracted from the first image and the second image, respectively, are partial areas extracted from the first image and the second image (e.g., areas R1 and R2 shown in FIG. 3 to be described later). The image comparison unit 30 thus calculates an image magnification that is the given magnification by which the second image is multiplied to match the image size of the first image and that of the second image to each other. In the following description, this image magnification is referred to as the "correction process coefficient k". The distortion conversion processing unit 50B corrects a change in the magnification of the second image, using the correction process coefficient k inputted from the image comparison unit 30. The correction process coefficient k will be described in detail later.

In rear stages to the distortion conversion processing unit 50, a luminance correction unit 51, an image interpolation unit 52, and a luminance information generation unit 53 are provided. The luminance correction unit 51, the image interpolation unit 52, and the luminance information generation unit 53 are provided in a path for carrying out given processes on an image having been subjected to distortion conversion, the image being outputted from the distortion conversion processing unit 50A, and in a path for carrying out given processes on an image having been subjected to distortion conversion and magnification change correction, the image being outputted from the distortion conversion processing unit 50B.

The luminance correction units 51 carry out a process of, for example, correcting a gain difference between the two cameras or a gain difference between a pixel in the first camera 10 and a pixel in the second camera 20, as a luminance correction process. This correction makes the luminance of an object appearing in the first image equal to the luminance of the same object appearing in the second image.

The image interpolation units 52 carry out, for example, a demosaicing process of converting a RAW image into a color image, as an image interpolation process.

To enable parallax image generation by the parallax image generation unit 60 in a rear stage, the luminance information generation units 53 convert, for example, the first image and the second image, which are color images, into luminance images, respectively, as a luminance information generation process. When the first image and the second image are converted into the luminance images, luminance information on the first image and luminance information on the second image are generated.

In this manner, the first image and the second image are subjected to respective processes of the luminance correction units 51, the image interpolation units 52, and the luminance information generation units 53. As a result, a first processed image and a second processed image are outputted from the luminance information generation units 53. In the image processing device 1, both the first processed image and the second processed image are equivalent to the luminance images. However, given the fact that each image is subjected to the given processes, these images are referred to as "processed images".

A parallax detection unit (parallax image generation unit 60) detects a parallax of an object appearing in the first image and in the second image, based on the first image at least of which a distortion is converted and on which luminance information is generated (i.e., the first processed image) and on the second image at least of which a distortion is converted, on which luminance information is generated, and of which the magnification is converted (i.e., the second processed image). The object appearing in the first image and in the second image, the object having its parallax detected by the parallax image generation unit 60, appear in the first processed image given by processing the first image and in the second processed image given by processing the second image. The parallax image generation unit 60 thus generates a parallax image for detecting the parallax of the object, based on the first processed image and the second processed image.

A distance calculation unit 70 calculates a distance to the object appearing in the first image and in the second image, based on the parallax detected by the parallax image generation unit 60 (the above-mentioned parallax image). The distance calculation unit 70 then outputs the distance to the object, to a vehicle control unit (not illustrated) or the like.

Based on a result of calculation of the distance to the object, the vehicle control unit (not illustrated) performs control, such as changing the traveling direction of the vehicle by steering it or stopping the vehicle in front of the object.

This image processing device 1 is characterized in that the image comparison unit 30 compares the images detected by the two cameras and that the distortion conversion processing unit 50B carries out the process of correcting the second image, using the comparison result. However, the techniques described in the above PTLs 1 and 2 feature a concept of correction of a distance measurement error that is different from a concept of correction of a distance measurement error according to the technique of this embodiment. According to the techniques described in PTLs 1 and 2, respective distortions of the first image and the second image are corrected so that in the event of temperature changes of the two lenses, images outputted from the two cameras become images taken under a given temperature condition. However, according to the techniques described in PTLs 1 and 2, for example, a temperature measured by a thermometer is not a lens temperature, because of which image correction accuracy is low, and displacement of an image caused by a temperature change varies between lenses. This poses a problem that an image cannot be corrected as a variation in displacement of the image is taken into consideration. According to the image processing device 1 of this embodiment, on the other hand, an image can be corrected by using a shift between actual images detected by two cameras. This offers an advantage that image correction accuracy can be improved.

A state in which an image taken by the camera changes as a result of a temperature change and a correction algorithm according to this embodiment will then be described.

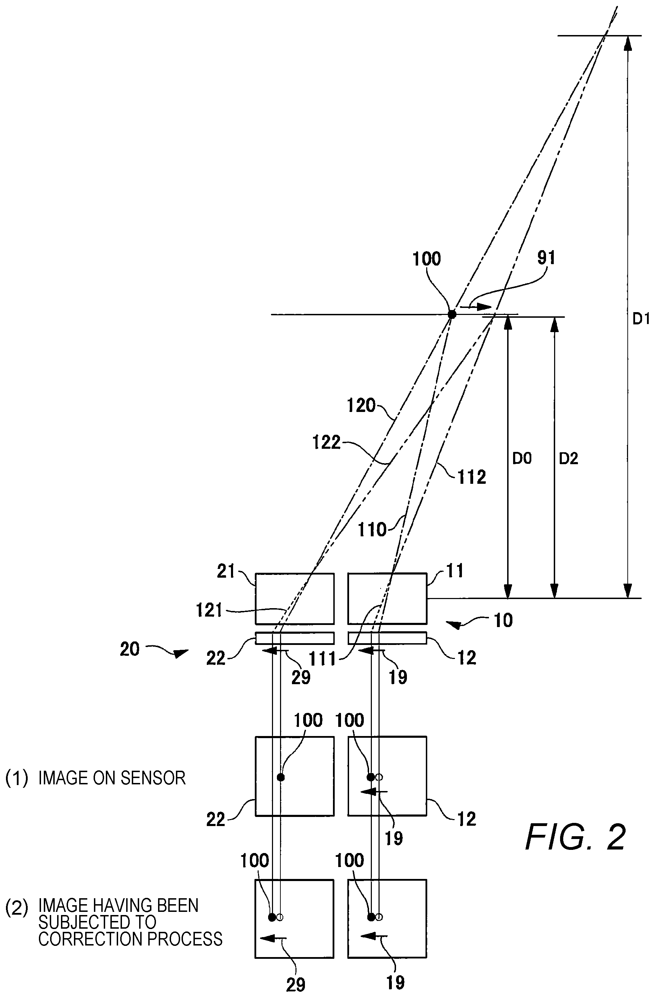

FIG. 2 is a diagram for explaining a correction algorithm according to this embodiment. The upper side of FIG. 2 shows a state in which the first image sensor 12 detects an image of an object 100 indicated by a black spot via the first lens 11 and a state in which the second image sensor 22 detects an image of the object 100 via second lens 21. It is assumed in this case that with respect to the forward direction of the vehicle, the first camera 10 is disposed on the right side and the second camera 20 is disposed on the left side. It is also assumed that the object 100 is, for example, a moving vehicle, a person, or a structure set on a road surface, such as a traffic light or a pole.

The lower side of FIG. 2 shows examples of (1) images on the sensors and (2) images having been subjected to a correction process. (1) of FIG. 2 shows an example of images of the object 100 detected by the first image sensor 12 and the second image sensor 22, respectively. (2) of FIG. 2 shows an example of images corrected by applying the correction algorithm of this embodiment to the image shown in (1) of FIG. 2.

First, a mechanism by which a distance measurement error occurs when the temperature of the first lens 11 changes will be described. A light beam 110 from the object 100 that is incident on the first camera 10 (first lens 11) and a light beam 120 from the object 100 that is incident on the second camera 20 (second lens 21) when measurement is made under a given temperature condition are indicated by single-dot chain lines, respectively. When the light beams 110 and 120 are measured under the given temperature condition, a distance D0 to the object is determined from a difference in light beam incident position (parallax) on the first image sensor 12 and the same on the second image sensor 22. In this case, the determined distance D0 is equal to the actual distance to the object.

Now, a light beam 111 from the object 100 that is incident on the first camera 10 when the temperature of the first lens 11 changes is indicated by a broken line. When the temperature of first lens 11 changes, a relationship of an image height with an angle of view of first lens 11 shifts under the influence of a change in the refractive index of first lens 11, a change in a lens surface gap, and the like. In this case, the light beam 110 is converted into the light beam 111 by the first lens 11, and, on the first image sensor 12, the position of an image is detected to be a position shifted in the direction of an arrow 19. Then, when the process of measuring the distance to the object 100 remains the same as the process carried out before the change in the temperature of the first lens 11, the light beam from the object 100 is falsely detected at an angle of view of a virtual light beam 112 indicated by a two-dot chain line.

A light beam 121 from the object 100 that is incident on the second camera 20 when the temperature of the second lens 21 does not change is indicated by a broken line. The light beam 120 is converted into the light beam 121 by the second lens 21, and, on the second image sensor 22, the position of an image is detected to be a position shifted in the direction of an arrow 29. An intersection between the light beam 120 and the virtual light beam 112 is falsely detected to be the position of the object 100, and based on this position, a distance D1 with the first lens 11 and second lens 21 defined as reference points is calculated, and the image processing device 1 outputs the distance D1. As shown in FIG. 2, the correct distance D0 to the object 100 does not match the erroneously calculated distance D1. This is the mechanism by which a distance measurement error occurs as a result of a change in the temperature of the first lens 11.

The correction algorithm according to this embodiment will then be described.

(1) of FIG. 2 demonstrates that when the temperature of first lens 11 changes, the position of the image of the object 100 on the first image sensor 12 is detected to be a position shifted in the direction of the arrow 19. On the second image sensor 22, however, the position of the image of the object 100 is not detected to be a shifted position.

By applying the correction algorithm according to this embodiment, correction information (a correction process coefficient k, which will be described later) is generated, based on two images detected as images on the sensors shown in (1) of FIG. 2. In this embodiment, a magnification of the image height (image size) of the object 100 detected by the second image sensor 22 is converted, based on the correction information.

As shown in the images of (2) of FIG. 2 having been subjected to the correction process, the image of the object 100 on the second image sensor 22 is corrected by shifting it in the direction of the arrow 29, which is the same as the direction of the arrow 19. This correction of the image of the object 100 on the second image sensor 22 can be interpreted as a fact that the light beam 120 has changed into the light beam 121 and a virtual light beam 122.

As a result, an intersection between the virtual light beam 112 and virtual light beam 122 is detected to be the position of the object 100. The intersection of the virtual light beams 112 and 122 corresponds to the position obtained by shifting the intersection of light beams 110 and 120 in the direction of arrow 91. Then, based on the position of the intersection between the virtual light beam 112 and the virtual light beam 122, a distance D2 is calculated. At this time, the distance D0 and the distance D2 are almost the same. A distance measurement error between the distance D0 and the distance D2 is hardly a problem in practical applications.

In this manner, it is demonstrated that in the event of a change in the image caused by a change in the temperature of the lens, a distance measurement error is reduced by matching an amount of displacement of the first image to an amount of displacement of the second image. The characteristics of the lens as described above cause a larger change in the image height as the lens's viewing angle gets wider. This situation, therefore, can be interpreted as a change in the magnification of the lens. In the following description, a change in the image (image height) resulting from a change in the temperature of the lens will be referred to as a change in the lens magnification.

It should be noted that although the above process causes the detection position of the object 100 in the left-to-right direction to shift in the direction of the arrow 91, this shift is small as a change in an angle of view and is as large as a change in the angle of view in the second decimal place. Therefore, this shift poses no problem, for example, in a case where the image processing device 1 of this embodiment is incorporated/used in a vehicle or a robot.

A method of obtaining correction information used in the correction algorithm according to this embodiment will then be described.

FIG. 3 depicts a change in an image on a sensor, the change resulting from a temperature change. On the right side in FIG. 3, an example of a change in the image detected by the first image sensor 12 is shown. On the left side in FIG. 3, an example of a change in the image detected by the second image sensor 22 is shown.

In each of the first image sensor 12 and the second image sensor 22, an on-sensor position of the object 100 detected before a change in the temperature of the first lens 11 is indicated as a black spot 1000. A circle C0 drawn by a broken line represents an image height equal to an image height at the black spot 1000. The circle C0 indicates that the position of the black spot 1000 with respect to a horizontal center remains the same in both of a case where the first lens 11 and the second lens 21 have the same temperature and a case where the first image sensor 12 and the second image sensor 22 have the same sensitivity. It should be noted that a change in the temperature of the camera results in a change in the sensitivity of the image sensor. Therefore, the second image is corrected in response not only to a change in the temperature of the lens but also to a change in the sensitivity of the image sensor.

An on-sensor position of the object 100 that is detected by the first image sensor 12 after the temperature of the first lens 11 changes and an on-sensor position of the object 100 that is detected by the second image sensor 22 after the temperature of the second lens 21 changes are each indicated as a black spot 1001. Each circle C1 drawn by a continuous line indicates an image height equal to an image height at the black spot 1001.

In other words, the circle C1 indicates that the position of the black spot 1001 with respect to a horizontal center differs in a case where respective temperatures of the first lens 11 and the second lens 21 are different from each other and in a case where respective sensitivities of the first image sensor 12 and the second image sensor 22 are different from each other.

In the first image sensor 12 and the second image sensor 22, amounts of displacement from the black spot 1000 to the black spot 1001, the displacement resulting from a change in the temperatures of the two lenses, are indicated as a displacement amount dx1 and a displacement amount dx2, respectively. Because magnification changes at the two lenses are different from each other, the displacement amount dx1 and the displacement amount dx2 shown respectively in the first image sensor 12 and the second image sensor 22 are different from each other. In other words, subtracting the displacement amount dx2 from the displacement amount dx1 gives a difference.

The image comparison unit 30 shown in FIG. 1 thus determines a relationship between the displacement amount dx1 and the displacement amount dx2. At this time, the image comparison unit (image comparison unit 30) defines a difference between an image displacement amount in an area R1, where the first image extends in the second direction, and an image displacement amount in an area R2, where the second image extends in the second direction, as a difference between the first image and the second image, and the image processing unit (distortion conversion processing unit 50) calculates the correction process coefficient k, which is a magnification for carrying out correction to eliminate the displacement amount difference created in the area where the second image extends in the second direction.

Based on image sizes in partial areas of the first image and the second image, the process the image comparison unit 30 carries out may be described differently as follows. The image comparison unit (image comparison unit 30) defines a difference between an image size in the partial area R1 of the first image, the partial area R1 extending in the second direction, and an image size in the partial area R2 of the second image, the partial area R2 extending in the second direction, as a difference between the first image and the second image, and the correction process coefficient k is calculated. The correction process coefficient k is a magnification that the image processing unit (distortion conversion processing unit 50) uses to carry out correction to eliminate an image size difference of the partial area of the second image.

The distortion conversion processing unit 50B carries out image processing according to the relationship between the displacement amount dx1 and the displacement amount dx2, thereby correcting a difference in change between the two lenses. However, the position of an image in the horizontal direction changes, depending on the distance to the object. Therefore, the image comparison unit 30 cannot obtain an accurate relationship between the displacement amount dx1 and the displacement amount dx2 unless using information on the distance to the object 100 that is already acquired in advance. It is thus difficult for the image processing device 1 to correct a difference in change between the two lenses, based only on the relationship between the displacement amount dx1 and the displacement amount dx2 in the horizontal direction, for example, on information detected on a road or the like.

To deal with such a problem, the image comparison unit 30 of this embodiment defines a difference between the circle C0 and the circle C1 and another difference between the circle C0 and the circle C1, the difference being not in the horizontal direction but in the vertical direction, as a displacement amount dy1 and a displacement amount dy2, respectively. Using the displacement amount dy1 and the displacement amount dy2 in the vertical direction, the image comparison unit 30 obtains the relationship between displacement amount dx1 and displacement amount dx2 in the horizontal direction. Because the lens usually has a characteristic of being rotational symmetry with respect to an optical axis, the displacement amount dx1 and the displacement amount dy1 are equal to each other. Likewise, the displacement amount dx2 and the displacement amount dy2 are also equal to each other. For this reason, even if the displacement amount dx1 and the displacement amount dx2 in the horizontal direction are replaced with the displacement amount dy1 and the displacement amount dy2 in the vertical direction, respectively, the image comparison unit 30 is still able to correct a difference between the first image and the second image.

(Case Where Image Height Displacement Amount Changes Linearly)

A method of correcting a difference in change between the two lenses, based on a relationship between the displacement amount dy1 and the displacement amount dy2, will then be described.

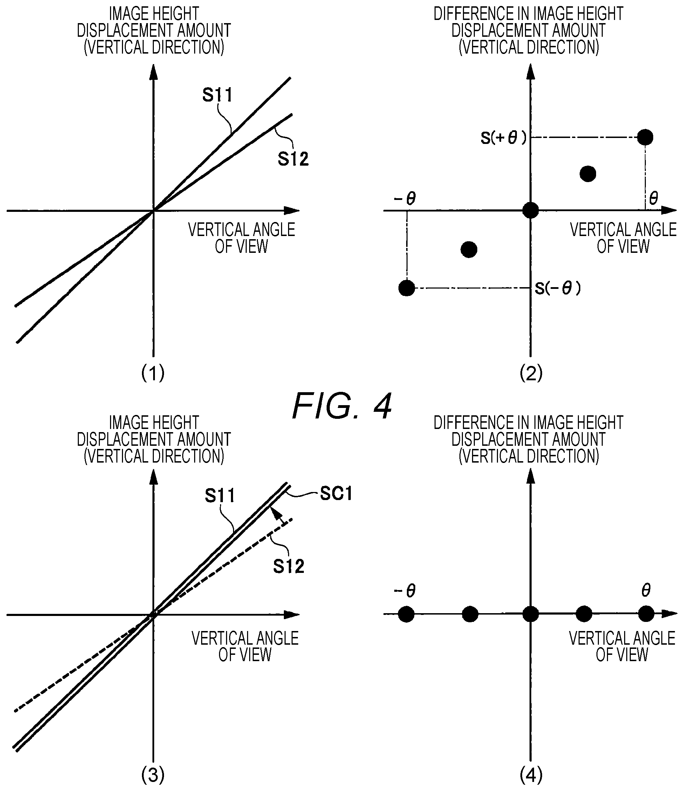

FIG. 4 shows diagrams for explaining a method of correcting a difference in change between the two lenses according to this embodiment. Displacement amounts in the area R1 and the area R2 of the first image sensor 12 and the second image sensor 22 of FIG. 3 will be described. FIG. 4 shows a case where an image height displacement amount changes linearly.

(1) of FIG. 4 is a graph showing the vertical angle of view dependency of an image height displacement amount on the camera, the image height displacement amount resulting from a temperature change $\Delta t$ of the first lens 11 with respect to a temperature of the second lens 12. The horizontal axis of the graph represents a vertical angle of view, and the vertical axis of the graph represents an image height displacement amount. In (1) of FIG. 4, a characteristic line S11 of the first camera 10 and a characteristic line S12 of the second camera 20 are indicated as straight lines, respectively. It should be noted that directly detecting the characteristic lines S11 and S12 shown in (1) of FIG. 4 is difficult.

The image comparison unit 30 of this embodiment uses a graph shown in (2) of FIG. 4, the graph showing the vertical angle of view dependency of a difference in image height displacement amount between the cameras, the image height displacement amount resulting from a temperature change $\Delta t$ of the first lens 11 with respect to a temperature of the second lens 12. The vertical axis of this graph represents a difference in image height displacement amount between the two cameras. To obtain the difference in image height displacement amount, for example, the image comparison unit 30 detects a difference in the position of the object 100.

The image comparison unit 30 then, for example, shifts the second image in the vertical direction with respect to the first image, as in a parallax matching process, and detects an amount of shift by which the two images match most. By comparing the first image with the second image, the image comparison unit 30 can obtain the position of a feature point as well.

Black spots on a graph shown in (2) of FIG. 4 represent objects other than the specific object 100 that are detected by using given images. Any structure reflected in the first and second images has its image height detected. Therefore, not just five black spots but a large number of black spots may be plotted on the graph. In this manner, a difference in displacement amount is expressed as a black spot indicating a difference between the position of the object reflected in the first image and the position of the object reflected in the second image. The image comparison unit (image comparison unit 30) thus detects the difference in displacement amount, based on the difference between the position of the object reflected in the first image and the position of the object reflected in the second image. The image comparison unit 30 then calculates the correction process coefficient k for changing a magnification of an image, the correction process coefficient k being applied to the second image of the first image and the second image used in (1) and (2) of FIG. 4.

(3) of FIG. 4 demonstrates the vertical angle of view dependency of an image height displacement amount that results when an optimum magnification is applied to the second image. (3) of FIG. 4 is a graph showing the vertical angle of view dependency of an image height displacement amount on the camera, the image height displacement amount resulting from the temperature change $\Delta t$ of the first lens 11 with respect to a temperature of the second lens 12, demonstrating a state in which the characteristic line S12 of the second camera 20 changes to a characteristic line SC1 when the optimum magnification is applied to the second image. Applying the optimum magnification changes the image height displacement amount, making the characteristic line S11 of the first camera 10 and the characteristic line SC1 of the second camera 20 identical. Specifically, when the characteristic line S12 shown in (1) of FIG. 4 is multiplied by the correction process coefficient k, the gradient of the characteristic line SC1, which is given by increasing the gradient of the characteristic line S12, and the gradient of the characteristic line S11 of the first camera 10 become identical.

(4) of FIG. 4 demonstrates the vertical angle of view dependency of a difference in image height displacement amount that results when the optimum magnification is applied to the second image. Because the characteristic line S11 of the first camera 10 and the characteristic line SC1 of the second camera 20 are identical, the difference in image height displacement amount becomes constant (becomes virtually 0), regardless of the vertical angle of view, as shown in (4) of FIG. 4.

In this embodiment, the image comparison unit 30 defines a magnification error signal MES (Magnification Error Signal) for obtaining the correction process coefficient k for making an image magnification the optimum magnification. In the following description, the magnification error signal MES may be abbreviated as "MES". MES is given by the following equation (1). S $(+\theta)$ and S $(-\theta)$ shown in equation (1) each denote a difference in image height displacement amount at a vertical angle of view $\theta$.

$$\text{MES} = \text{S} \ (+\theta) \ - \ \text{S} \ (-\theta) ...(1)$$

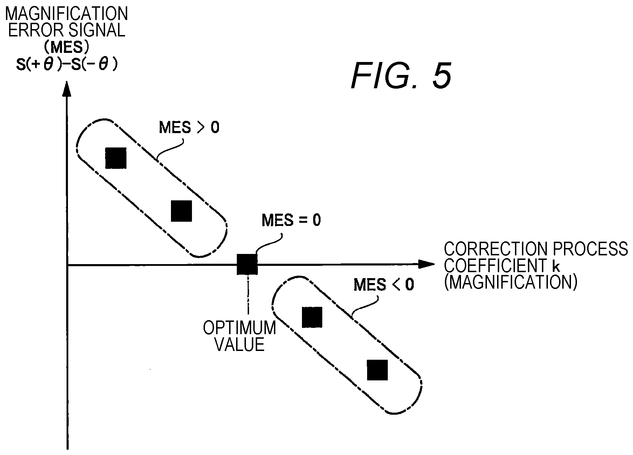

FIG. 5 is a graph showing the k dependency of the magnification error signal MES. The horizontal axis of this graph represents the correction process coefficient k (magnification) and the vertical axis of the graph represents the magnification error signal MES. The magnification error signal MES changes as a result of a change in the correction process coefficient k.

In FIG. 3, S $(+\theta)$ is expressed as dy1-k×dy2 and S $(-\theta)$ is expressed as -(dy1-k×dy2). It follows that MES, i.e., S$(+\theta)$-S$(-\theta)$ is expressed as S$(+\theta)$-S$(-\theta)$=2(dy1-k×dy2)

The graph shown in (2) of FIG. 4 demonstrates that S $(+\theta)$ takes a positive value and S $(-\theta)$ takes a negative value. In the case of the graph shown in (2) of FIG. 4, for example, MES > 0 holds. In a case where the graph shown in (2) of FIG. 4 is a graph of left upward sloping, MES < 0 holds.

In a case where the correction process coefficient k is the optimum value, that is, in the case of the graph shown in (4) of FIG. 4, however, S $(+\theta)$ and S $(-\theta)$ each takes a value of "0", in which case equation (1) gives S $(+\theta)$-S $(-\theta)$ =0, that is, MES is "0". Because MES=0 means dy1-k×dy2=0, modifying dy1-k×dy2=0 gives k=dy1/dy2. Hence the correction process coefficient k is expressed as k=dy1/dy2.

As shown in FIG. 5, when the correction process coefficient k is larger than the optimum value, MES is negative.

For this reason, the image comparison unit 30 calculates MES with the correction process coefficient k changed in value, and obtains the correction process coefficient k (optimum value) that makes MES "0". The image comparison unit 30 outputs the correction process coefficient k obtained as the optimum value, to the distortion conversion processing unit 50B (see FIG. 1).

The image processing unit (distortion conversion processing unit 50) corrects the second image that develops a difference with the first image as a result of a change in the temperature of the first camera (first camera 10) and in the temperature of the second camera (second camera 20). In addition, this change in the temperature of the first camera (first camera 10) and in the temperature of the second camera (second camera 20) causes a difference between the sensitivity of the first image sensor (first image sensor 12) included in the first camera (first camera 10) and the sensitivity of the second image sensor (second image sensor 22) included in the second camera (second camera 20). Therefore, the image processing unit (distortion conversion processing unit 50) can correct the second image that develops a difference with the first image, based on a difference between the sensitivity of the first image sensor (first image sensor 12) and the sensitivity of the second image sensor (second image sensor 22).

In this manner, by using the correction process coefficient k, the distortion conversion processing unit 50B can correct a magnification change of the second image that is caused by a change in the temperature of the lens or in the sensitivity of the sensor. As mentioned above, the lens has the characteristics of being rotational symmetry with respect to the optical axis, and therefore a result of correction of a magnification change in the vertical direction is effective also in correction of a magnification change in the horizontal direction.

It should be noted that a magnification change of the second image occurs also as a result of a change in a gap between the lens and the sensor. Because the correction algorithm according to this embodiment can correct a magnification change, the algorithm can also correct a change in an image resulting from a change in a gap between the lens and the sensor. For example, because a change in a gap between the lens and the sensor directly results in a change in a magnification, by correcting this change in the magnification, the change in the image resulting from the change in the gap between the lens and the sensor can be corrected.

The description has been made so far on the assumption that the image comparison unit 30 uses the vertical angles of view $\pm\theta$ in calculation of MES. However, for example, after detecting a large number (6 or more) of black spots shown in (2) of FIG. 4, the image comparison unit 30 may calculate the correction process coefficient k that makes MES "0" by using the value of a difference in image height displacement amount that is interpolated with the black spots.

A fact that the correction algorithm of this embodiment is effective even for a case where a different disturbance arises on the first camera 10 and the second camera 20 will then be described. It has been explained that because the two lenses each have the characteristics of being rotational symmetry with respect to the optical axis, the displacement amount dx1 and the displacement amount dy1 are equal to each other. However, when a component shift occurs in the first camera 10 and the second camera 20, the displacement amount dx may not match the displacement amount dy. There is another case where a detection magnification of the first camera (first camera 10) and a detection magnification of the second camera (second camera 20) may change with time. Even in such a case, the image processing unit (distortion conversion processing unit 50) can correct the second image that develops a difference with the first image.

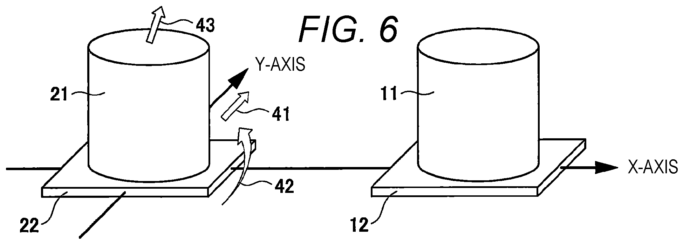

An example in which the detection magnification of the first camera (first camera 10) and the detection magnification of the second camera (second camera 20) change with time will be described with reference to FIG. 6.

FIG. 6 depicts a relationship in component position between the lens and the sensor. The right side of FIG. 6 shows a state in which the first lens 11 and the first image sensor 12 are arranged, and the left side of FIG. 6 shows a state in which the second lens 21 and the second image sensor 22 are arranged. The first image sensor 12 and the second image sensor 22 are lined up in the X-axis direction.

For example, in any one of a case where the second image sensor 22 shifts in the Y-axis direction (arrow 41), a case where the second image sensor 22 rotates about the Y-axis serving as a rotation axis (arrow 42), and a case where the optical axis of the second image sensor 22 shifts in the Y-direction (arrow 43), an image height displacement amount in the vertical direction detected by the second image sensor 22 shifts and therefore a difference in image height displacement amount in the vertical direction shifts, too. A fact that the correction algorithm of this embodiment is effective also to these three factors that cause a shift in the difference in image height displacement amount will be described below. It should be noted that the correction algorithm of this embodiment is effective also to a case where the detection magnification of the first camera 10 and the detection magnification of the second camera 20 change because the original positions of attachment of the first camera 10 and the second camera 20 to the vehicle have shifted from the correct positions of attachment.

(Case Where Second Image Sensor Moves in Y direction)

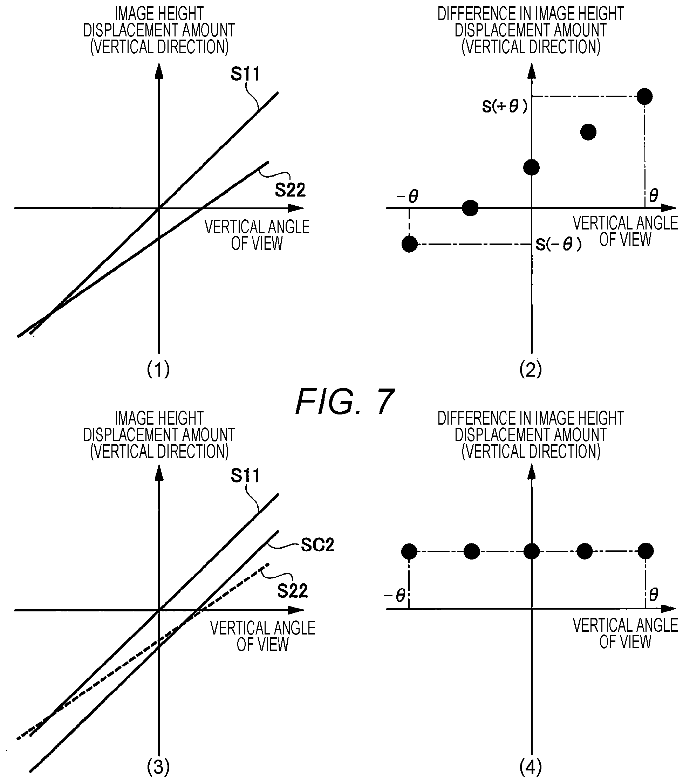

FIG. 7 depicts an effect of correction of an image height displacement amount and a difference in image height displacement amount in a case where the second image sensor 22 shown in FIG. 6 moves in the Y direction (arrow 41 in FIG. 6). (1), (2), (3), and (4) in FIG. 7 show the same contents as shown in (1), (2), (3), and (4) in FIG. 4, respectively.

The characteristic line S11 of the first camera 10 shown in a graph of (1) of FIG. 7 is the same as the characteristic line S11 shown in FIG. 4. A characteristic line S22 of the second camera 20 shown in the graph of (1) of FIG. 7 is, on the other hand, different from the characteristic line S12 shown in FIG. 4 in that the characteristic line S22 has shifted downward along the axis representing the image height displacement amount in the vertical direction. As a result, the difference in image height displacement amount shown in a graph of (2) of FIG. 7 is shifted upward. MES in this case is positive as in the case of calculating MES referring to the graph of (2) of FIG. 4.

The image comparison unit 30 then carries out correction that makes MES "0". As a result, the image height displacement amount and the difference in image height displacement amount change in a manner shown in graphs (3) and (4) of FIG. 7. When the characteristic line S11 of the first camera 10 and a characteristic line SC2 of the second camera 20 become identical in gradient, as shown in (3) of FIG. 7, the difference in image height displacement amount becomes constant regardless of the vertical angle of view, as shown in (4) of FIG. 7. As shown in (4) of FIG. 7, an offset occurs in the difference in image height displacement amount. but this does not affect parallax detection.

However, offset in the vertical direction between the first image and the second image indicates a positional shift between these two images, which raises a possibility that detected objects in the two images may be different from each other. This problem is solved, for example, when the distortion conversion processing unit 50A or the distortion conversion processing unit 50B shifts the first image or the second image in the vertical direction in such a way as to eliminate the offset.

(Case Where Second Image Sensor Rotates)

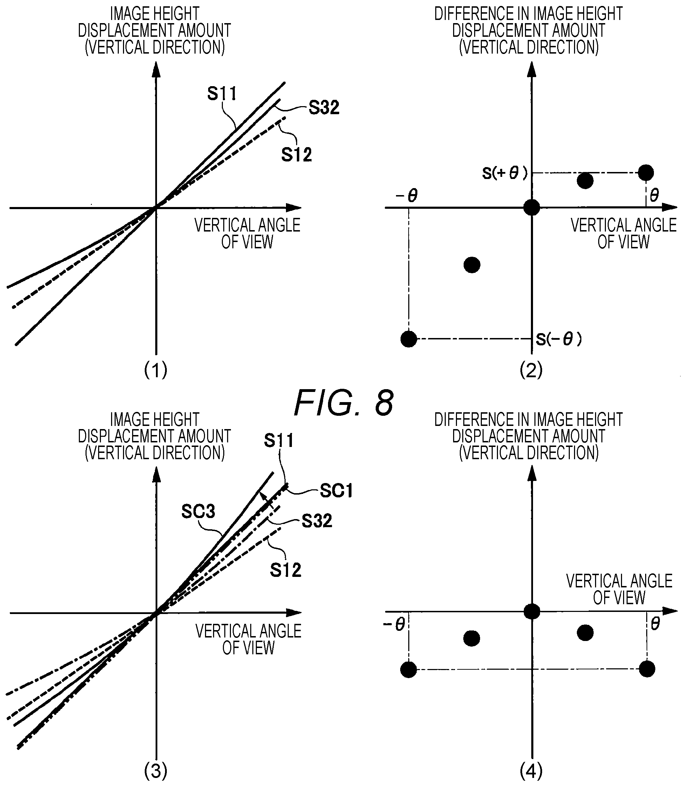

FIG. 8 depicts an effect of correction of an image height displacement amount and a difference in image height displacement amount in a case where the second image sensor 22 rotates around the Y-axis serving as a rotation axis (arrow 42 in FIG. 6). (1) to (4) in FIG. 8 show the same contents as shown in (1) to (4) in FIG. 4, respectively.

When the second image sensor 22 does not rotate, light incident along the optical axis is received by the second image sensor 22 at a position symmetric with respect to the optical axis of the second lens 21. However, when a light-receiving surface of the second image sensor 22 rotates at an angle with respect to the optical axis of the second lens 21, even if a position at which the light is received in this case is symmetric with respect to the optical axis of the second lens 21, a distance the light coming from the second lens 21 travels to reach this position of the second image sensor 22 becomes different from a distance the light travels to reach the above position of the second image sensor 22 that does not rotate. This results in a change in an image height on the second image sensor 22.

The characteristic line S11 of the first camera 10 shown in a graph of (1) of FIG. 8 is the same as the characteristic line S11 shown in FIG. 4. It should be noted, however, that a characteristic line S32 of the second camera 20 shown in the graph of (1) of FIG. 8 is generated as a combination of the characteristic line S12 resulting from a magnification change (see (1) of FIG. 4) and characteristics resulting from rotation of the second image sensor 22 about the Y-axis serving as the rotation axis. The characteristics resulting from rotation of second image sensor 22 are expressed as a non-linear curve substantially symmetric with respect to the vertical angle of view. Thus, in a graph of (2) of FIG. 8, the difference in image height displacement amount is shown as a nonlinear curve, and MES remains positive.

When the image comparison unit 30 carries out the correction that makes MES "0", the characteristic line S12 resulting from the magnification change can be suppressed, as indicated in graphs (3) and (4) of FIG. 8, (3) of FIG. 8 shows the characteristic line SC1 of the second camera 20 that results when the optimum magnification is applied, and a characteristic line SC3 of the second camera 20 that is processed by the distortion conversion processing unit 50B. As described with reference to FIG. 4, the characteristic line S11 of the first camera 10 and the characteristic line SC1 of the second camera 20 become identical. In contrast, the characteristic line S11 of the first camera 10 and the characteristic line SC3 of the second camera 20 that is processed by the distortion conversion processing unit 50B do not become identical. This leaves a characteristic line of characteristics resulting from a rotational shift of the second image sensor 22 in the X-axis direction. The characteristics, however, do not affect a parallax detection by the parallax image generation unit 60.

It should be noted that correction of MES in the case of the second image sensor 22 rotating about the Y-axis serving as the rotation axis can be carried out as a process in which the distortion conversion processing unit 50A or the distortion conversion processing unit 50B corrects the first image or the second image, based on an image height displacement component in the vertical direction.

A correction effect in a case where the optical axis of the second lens 21 shifts in the Y direction (arrow 43 in FIG. 6) will then be described.

A shift in the optical axis of the second lens 21 can be expressed as a combination of a shift of the second image sensor 22 in the Y-axis direction and a rotational shift of the same in the X-axis direction. The distortion conversion processing unit 50B is thus able to correct a magnification change resulting from a temperature change of the second lens 21.

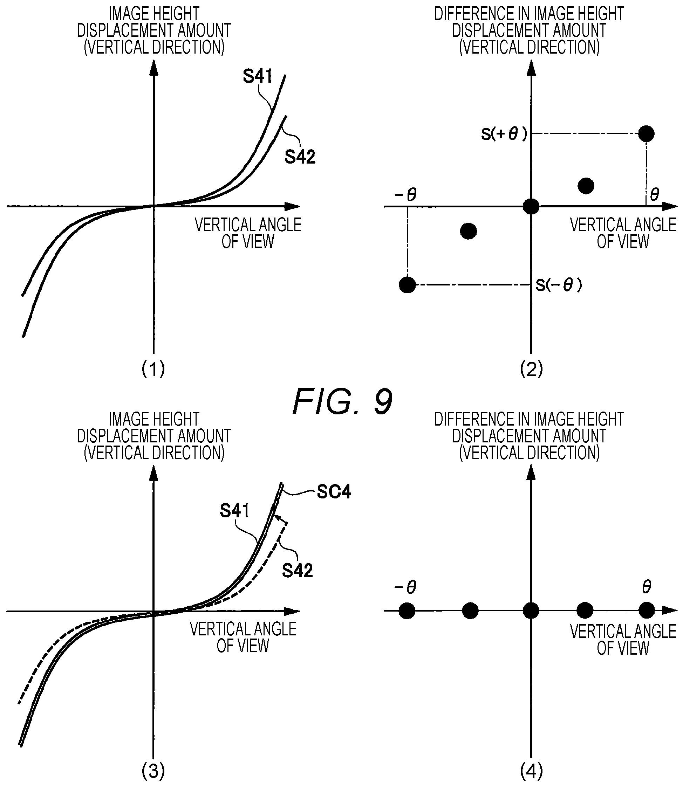

In this embodiment, the image height displacement described with reference to FIGS. 4, 7, and 8 have been described as the image height displacement that changes linearly with respect to the vertical angle of view. However, even if the image height displacement changes nonlinearly with respect to the vertical angle of view, the effect of correction of the image height displacement amount and the difference in image height displacement amount is still achieved. The correction effect in a case where the image height changes non-linearly with respect to the vertical angle of view will be described with reference to FIG. 9.

(Case Where Image Height Displacement Amount Changes Nonlinearly)

FIG. 9 depicts an effect of correction of an image height displacement amount and a difference in image height displacement amount in a case where the image height displacement amount changes non-linearly with respect to a vertical angle of view.

A graph of (1) of FIG. 9 shows an example of a characteristic curve S41 of the first camera 10 and a characteristic curve S42 of the second camera 20 in a case where the image height displacement amount changes non-linearly with respect to the vertical angle of view.

When the image height displacement amount changes non-linearly with respect to the vertical angle of view, characteristic curves of the image height displacement amount are symmetrical with respect to the vertical angle of view of 0 degree. Therefore, the image comparison unit 30 detects a given image height with respect to the vertical angle of view, obtains a difference in image height displacement amount, and calculates MES. The difference in image height displacement amount is shown in a graph of (2) of FIG. 9. In this graph, the difference in image height displacement amount changes nonlinearly.

A graph of (3) of FIG. 9 shows a state in which a characteristic curve S42 of the second camera 20 changes into a characteristic curve SC4 when the optimum magnification is applied to the second camera 20. As a result, the characteristic curve S11 of the first camera 10 and the characteristic curve SC4 of the second camera 20, both characteristic curves each representing the image height displacement amount, become identical.

A graph of (4) of FIG. 9 is the same as the graph of (4) of FIG. 4. The image comparison unit 30 obtains the correction process coefficient k that makes MES "0", which brings the difference in image height displacement amount into "0" regardless of the vertical angle of view. The image comparison unit 30 is thus able to correct a magnification change resulting from a temperature change of the second lens 21.

In this embodiment, information indicating the horizontal angle of view of substantially 0 degree shown in the areas R1 and R2 of FIG. 3 is used. However, information on other areas may also be used.

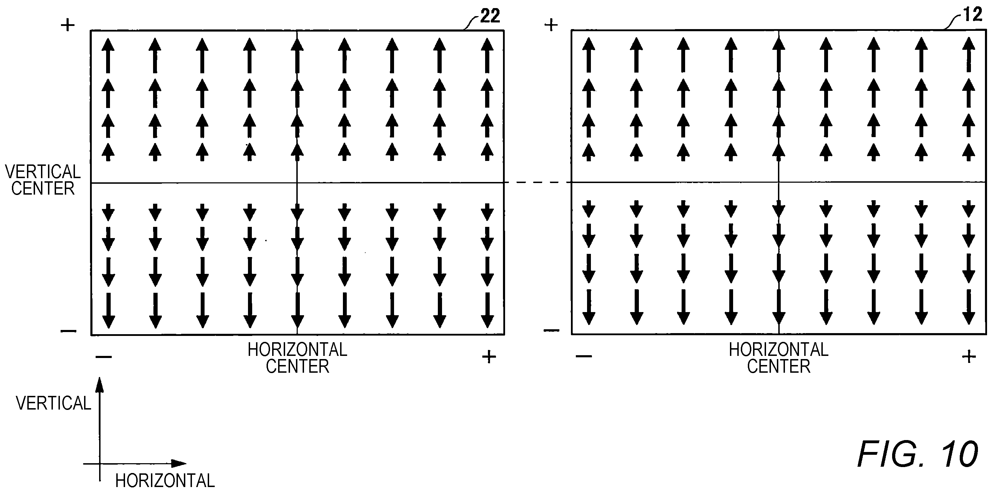

FIG. 10 depicts an example of vertical displacement of an image height at different positions in the horizontal direction, the vertical displacement occurring at the first lens and the second lens.

An example of displacement of the image height in the vertical direction by the first lens 11 is shown on the right side in FIG. 10, and an example of displacement of the image height in the vertical direction by the second lens 21 is shown on the left side in FIG. 10. In FIG. 10, a vertical center represents the position of the vertical angle of view being 0 degree, and a horizontal center represents the position of the horizontal angle of view being 0 degree. FIG. 10 demonstrates that displacement of the image height in the vertical direction by the two lenses is small in the vicinity of the vertical center of each lens, regardless of the distance from the horizontal center.

FIG. 10 demonstrates also that displacement of the image height in the vertical direction gets larger as the position of displacement goes away from the vertical center of each lens in the positive direction or negative direction. This is because that the image height is displaced in the vertical direction, depending not on the horizontal angle of view but on the vertical angle of view only. Therefore, based on the characteristics of displacement of the image height at each position by the two lenses, when the image comparison unit 30 calculates MES, information on the image height in the vertical direction is acquired for various areas of the two lenses.

Based on displacement of the image height by the two lenses in the vertical direction at each position in the horizontal direction shown in FIG. 10, areas used for calculation of MES will be described with reference to FIG. 11.

FIG. 11 depicts examples of various areas detected by the two sensors, the areas being used for calculation of MES.

(1), (3), (5), and (7) of FIG. 11 show examples of areas detected by the second image sensor 22, and (2), (4), (6), and (8) of FIG. 11 shows examples of areas detected by the first image sensor 12. To (1) to (8) of FIG. 11, plus and minus signs with respect to the vertical center and the horizontal center of each sensor are added in the same manner as in FIG. 10. To avoid complication of the drawings, description of the vertical center and the horizontal center of each sensor is omitted.

(1) and (2) of FIG. 11 demonstrate that information on the entire surface of each sensor (areas R11 and R12) is used. The areas R11 and R12 are included in the entire surface of each sensor, in which case, when the same object is included in the vertical direction with respect to the horizontal direction, the process of calculating MES and the correction process coefficient k is the same as the process of calculating MES and the correction process coefficient k shown in FIG. 4 and 5 in that the image comparison unit 30 compares images, using a change in the vertical direction.

(3) and (4) of FIG. 11 demonstrate that information on non-zero degree horizontal angles of view of each sensor is used. (3) and (4) of FIG. 11 demonstrate, for example, that information on positions (areas R21 and R22) closer to the negative side (left end) with respect to the horizontal center of 0 degree is used. The areas R21 and R22 are at positions one-sided in the horizontal direction, in which case, when the same object is included in the areas R21 and R22, the process same as the process of calculating MES and the correction process coefficient k shown in FIG. 4 and 5 applies in this case.

(5) and (6) of FIG. 11 demonstrate that information on positions (areas R31 and R32) in an diagonal direction of each sensor is used. The areas R31 and R32 are diagonal with respect to the horizontal direction, in which case, when the same object is included in the areas R31 and R32, the process of calculating MES and the correction process coefficient k is the same as the process of calculating MES and the correction process coefficient k shown in FIG. 4 and 5 in that the image comparison unit 30 compares images, using a change in the vertical direction.

(7) and (8) of FIG. 11 demonstrate that information on positions (areas R41 and R42) symmetric with respect to the vertical angle of view of 0 degree of each sensor is used. When the same object is included in the areas R41 and R42, the process of calculating MES and the correction process coefficient k is the same as the process of calculating MES and the correction process coefficient k shown in FIG. 4 and 5 in that the image comparison unit 30 compares images, using a change in the vertical direction. Thus, the image comparison unit (image comparison unit 30) detects a difference in displacement amount, using a plurality of areas of the first image that correspond to the optical axis of the first lens (first lens 11) of the first camera (first camera 10) and a plurality of areas of the second image that correspond to the optical axis of the second lens (second lens 21) of the second camera (second camera 20).

As in this case, a processing load of the image processing device 1 can be reduced by calculating the correction process coefficient k from the areas R41 and R42 including only the objects near vertical angles of view $\pm\theta$ and carrying out a magnification correction process.

A wider vertical angle of view $\theta$ leads to a larger image height displacement amount, thus making detection of a difference in image height displacement amount easier. To reduce an error, MES may be calculated by using equation (2) below. $\pm\theta 1$ and $\pm\theta 2$ in equation (2) may represent any one of black spots shown in (2) of FIG. 4.

$$\text{MES} = [\text{S} (+\theta 1) - \text{S} (-\theta 1)] + [\text{S} (+\theta 2) - \text{S} (-\theta 2)] + ...$$

$$(2)$$

<Example of Hardware Configuration of Computer>

A hardware configuration of a computer 200 making up the image processing device 1 will then be described.

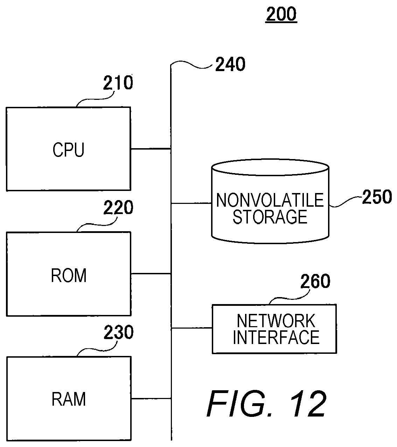

FIG. 12 is a block diagram showing an example of a hardware configuration of the computer 200. The computer 200 is an example of hardware used as a computer that can operate as the image processing device 1 according to this embodiment. The image processing device 1 according to this embodiment, that is, the computer 200 (computer) executes a program to implement an image processing method that the functional blocks shown in FIG. 1 carry out through their cooperative operations.

The computer 200 includes a central processing unit (CPU) 210, a read-only memory (ROM) 220, and a random access memory (RAM) 230, which are each connected to a bus 240. The computer 200 further includes a nonvolatile storage 250 and a network interface 260.

The CPU 210 reads a program code of software that implements various functional units according to this embodiment, from the ROM 220, loads the program code onto the RAM 230, and executes the program code. Variables, parameters, and the like generated during computation by the CPU 210 are temporarily written to the RAM 230, from which these variables, parameters, and the like are read by the CPU 210 when necessary. In place of the CPU 210, a micro processing unit (MPU) may be used or the CPU210 and a graphics processing unit (GPU) may be used in combination. The CPU210 executes software to implement the functional units shown in FIG. 1, that is, the image comparison unit 30, the distortion conversion processing unit 50, the luminance correction unit 51, the image interpolation unit 52, the luminance information generation unit 53, the parallax image generation unit 60, and the distance calculation unit 70.

As the nonvolatile storage 250, for example, a hard disk drive (HDD), a solid state drive (SSD), or a nonvolatile memory is used. The nonvolatile storage 250 records therein an operating system (OS) and various parameters, and a program to run the computer 200 as well. The ROM 220 and the nonvolatile storage 250 record programs, data, and the like the CPU 210 needs to operate, and are used as an example of computer-readable non-transitory storage media storing programs executed by the computer 200. In the nonvolatile storage 250, for example, the image correction coefficient k calculated by the image comparison unit 30, the first image and the second image, the first processed image and the second processed image, a parallax image, information on a distance to the object, and the like are recorded.

For example, a network interface card (NIC) or the like is used as the network interface 260, and various data can be transmitted and received between devices via a local area network (LAN), a dedicated line, or the like connected to a terminal of the NIC. Information on a distance to the object calculated by the distance calculation unit 70 shown in FIG. 1 is transmitted to an electronic control unit (ECU) (not illustrated) or a vehicle control device by the network interface 260, and is used for controlling the vehicle.

<Example of Processing by Image Processing Device 1 >

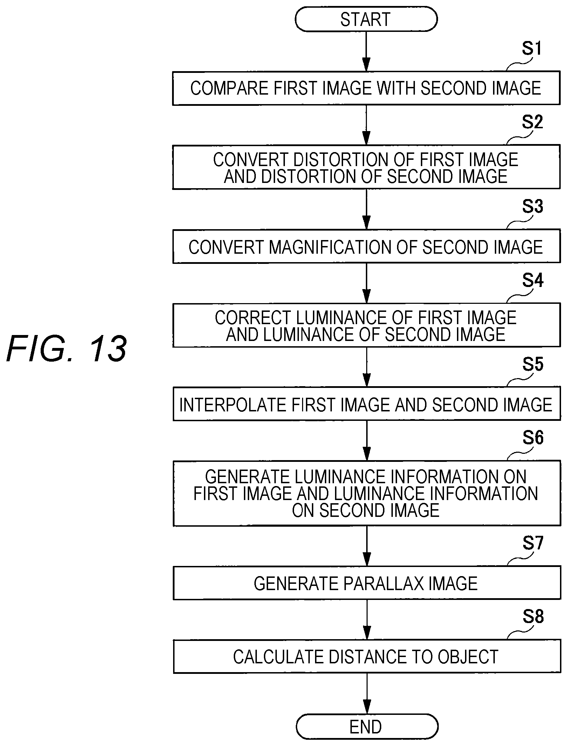

FIG. 13 is a flowchart showing an example of processing by the image processing device 1. The image processing device 1 carries out an image processing method according to this embodiment through processes by the functional units.

First, the image comparison unit 30 compares the first image inputted from the first camera 10 with the second image inputted from the second camera 20 (S1), and calculates the correction process coefficient k. Subsequently, the distortion conversion processing unit 50A converts a distortion of the first image, and the distortion conversion processing unit 50B converts a distortion of the second image (S2). Processes at steps S1 and S2 may be executed in parallel.

Subsequently, based on the correction process coefficient k, the distortion conversion processing unit 50B converts a magnification of the second image having its distortion converted (S3). Processes at steps S2 and S3 may be executed in reverse order or may be executed simultaneously.

Subsequently, the luminance correction unit 51 corrects the luminance of the first image having its distortion converted, and corrects the luminance of the second image having its distortion and magnification converted (S4).

Subsequently, the image interpolation unit 52 interpolates the first image having its distortion converted, and interpolates the second image having its distortion and magnification converted (S5).

Subsequently, the luminance information generation unit 53 generates luminance information on the first image having its distortion converted, and generates luminance information on the second image having its distortion and magnification converted (S6).

Subsequently, the parallax image generation unit 60 generates a parallax image, based on the luminance information on the first image having its distortion converted and on the luminance information on the second image having its magnification converted (S7).

Subsequently, the distance calculation unit 70 calculates a distance to the object, based on the parallax image (S8).

Image processing at steps S1 to S8 is repeatedly executed at every give time cycle. Then, the vehicle control unit (not illustrated) controls the vehicle, based on the distance to the object calculated by the distance calculation unit 70. It should be noted that the image processing device 1 and the vehicle control unit may be integrally configured into an electronic control device.

According to the image processing device 1 of the first embodiment described above, by calculating the correction process coefficient k for suppressing a difference in image height displacement amount, which is notable particularly at an end part ($\pm$ 60 degrees against the center) of an angle of view of a camera having a lens with a horizontal angle of view (about 120 degrees) wider than a horizontal angle of view (about 60 degrees) of a conventional lens, correcting the second image becomes possible.

The image comparison unit 30 of the image processing device 1 calculates MES so that in displacement of image heights detected from the first image and the second image, a difference in image height displacement amount in the vertical direction at vertical angles of view $\pm\theta$ becomes constant (e.g., "0"). This MES is a value depending on the correction process coefficient k, and becomes "0" when the correction process coefficient k is the optimum value. The distortion conversion processing unit 50B can convert the distortion of the second image taken by the second camera 20 and in addition, can also correct a magnification change of the second image, using the correction process coefficient k that makes MES "0". In this manner, the image comparison unit 30 detects a difference in magnification of an image detected by the image sensor of each camera, based not on a displacement amount in the horizontal direction but on a difference in image height displacement amount in a direction different from the horizontal direction. Then, the distortion conversion processing unit 50B carries out correction by which a magnification of an image detected by the image sensor of one camera is adjusted to an image detected by the image sensor of the other camera.

As a result, while a conventional case requires that a large-capacity storage device for storing image correction information be provided, the image processing device 1 of this embodiment can correct images outputted from the two cameras in accordance with a change in the stereo camera (two cameras). The image processing device 1, therefore, has no need to provide a large-capacity storage device for storing image correction information.

In addition, each of the processing units in rear stages to the distortion conversion processing unit 50 can handle the second image, which is detected by the second image sensor 22 of the second camera 20 and whose magnification change has been corrected, in the same manner as the first image taken by the first camera 10 is handled. As a result, an error in a parallax image generated by the parallax image generation unit 60 is reduced, and the distance to the object, which is calculated by the distance calculation unit 70, is measured accurately.

In addition, in any one of a case where the second image sensor 22 shifts in the Y-axis direction, a case where the second image sensor 22 rotates about the Y-axis serving as the rotation axis, a case where the optical axis of the second image sensor 22 shifts in the Y-direction, and a case where the image height changes nonlinearly with respect to the vertical angle of view, by matching the characteristics of the second camera 20 to the characteristics of the first camera 10, the difference in image height displacement amount becomes constant, regardless of the vertical angle of view. As a result, an error in a parallax image generated by the parallax image generation unit 60 is reduced, and the distance to the object, which is calculated by the distance calculation unit 70, is measured accurately.

It is assumed that the image processing device is used in various embodiments. Hereinafter, configuration examples of image processing devices according to second to fourth embodiments of the present invention will be described. The image processing device of each embodiment uses images to be processed that are different between image processing devices of different embodiments. However, the image processing device of each embodiment is same as the image processing device 1 of the first embodiment in that the correction process coefficient k that makes MES "0" is calculated, using such images, and that one image (an image taken by the second camera 20 or a processed image obtained by subjecting the image to a given process) is corrected by the correction process coefficient k.

[Second Embodiment]

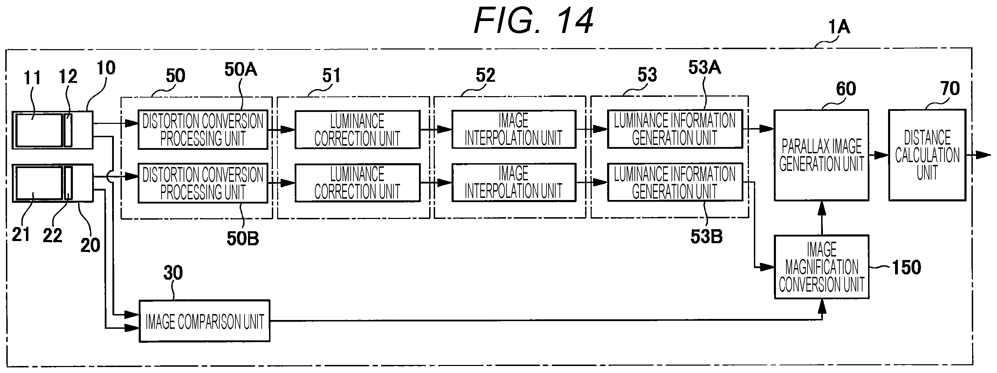

FIG. 14 is a block diagram showing an example of an internal configuration of an image processing device 1A according to a second embodiment of the present invention. The image processing device 1A of the second embodiment is same as the image processing device 1 of the first embodiment in that the correction process coefficient k, which a result of comparison between the first image and the second image, is calculated.

The image comparison unit 30 is disposed in a rear stage to the first camera 10 and the second camera 20 in the same manner as in the image processing device 1 shown in FIG. 1. The image comparison unit 30 outputs the correction process coefficient k to an image magnification conversion unit 150.

The image magnification conversion unit 150 is disposed in a rear stage to the image comparison unit 30 and to a luminance information generation unit 53B. An image processing unit according to the second embodiment is the image magnification conversion unit (image magnification conversion unit 150) that converts a magnification of the second image having its distortion converted, using the correction process coefficient k. The image magnification conversion unit 150 converts a magnification of the second processed image inputted from the luminance information generation unit 53B, using the correction process coefficient k inputted from the image comparison unit 30. The image magnification conversion unit 150 outputs the second processed image having its magnification converted, to the parallax image generation unit 60.

A parallax detection unit (parallax image generation unit 60) detects a parallax of an object appearing in the first image and in the second image, based on the first image at least of which a distortion is converted and on which luminance information is generated (i.e., the first processed image) and on the second image at least of which a distortion is converted, on which luminance information is generated, and of which the magnification is converted (i.e., the second processed image). The parallax image generation unit 60 generates a parallax image for detecting the parallax of the object, based on the first processed image inputted from a luminance information generation unit 53A and on the second processed image having its magnification converted that is inputted from the image magnification conversion unit 150.

The distance calculation unit 70 calculates a distance to the object, based on the parallax image generated by the parallax image generation unit 60.

According to the configuration of the image processing device 1A of the second embodiment described above, a magnification change of the second image resulting from a temperature change of the two lenses can be corrected. The image comparison unit 30 calculates the correction process coefficient k, which is a result of comparison between the first image and the second image, and the image magnification conversion unit 150 converts the magnification of the second processed image, using the correction process coefficient k. As a result, a parallax of each object that is generated by the parallax image generation unit 60 is accurately obtained, and the distance to the object calculated by the distance calculating unit 70 is accurately calculated as well.

[Third Embodiment]

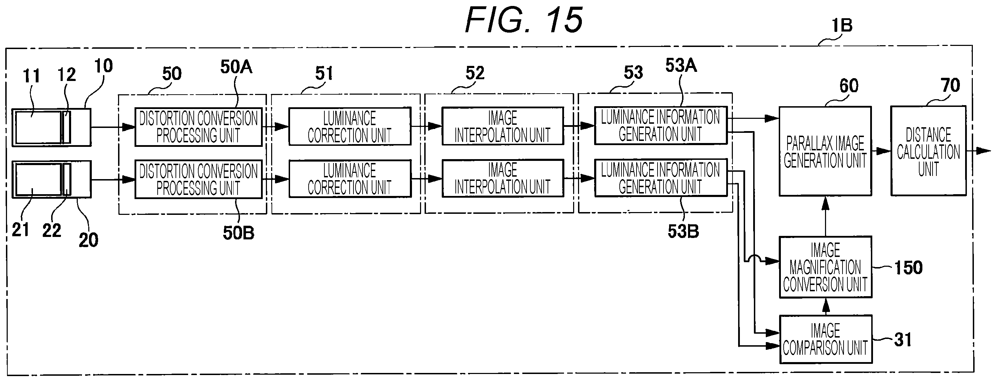

FIG. 15 is a block diagram showing an example of an internal configuration of an image processing device 1B according to a third embodiment of the present invention. According to the image processing device 1B of the third embodiment, the correction process coefficient k is calculated, using the first processed image and the second processed image on which luminance information has been generated.

The image processing device 1B of the third embodiment includes an image comparison unit 31 and the image magnification conversion unit 150, in addition to the functional units included in the image processing device 1. The luminance information generation unit 53 includes the luminance information generation unit 53A that generates luminance information from an image taken by the first camera 10, and the luminance information generation unit 53B that generates luminance information from an image taken by the second camera 20. In the image processing device 1B, the process the distortion conversion processing unit 50 carries out on the first image and the second image is carried out in the same manner as in the example shown in FIG. 1. Therefore, description of the distortion conversion processing units 50A and 50B, which are shown in FIG. 1, will be omitted.

The image comparison unit 31 is provided in place of the image comparison unit 30 shown in FIG. 1, and is disposed in a rear stage to the luminance information generation unit 53. The image comparison unit (image comparison unit 31) calculates the correction process coefficient k, based on the first image (i.e., first processed image) at least whose distortion has been converted and on which luminance information has been generated and on the second image (i.e., second processed image) at least whose distortion has been converted and on which luminance information has been generated. Therefore, to the image comparison unit 31, the first processed image and the second processed image on which luminance information has been generated, respectively, are inputted from the luminance information generation units 53 A and 53B. The first processed image is an image taken by the first camera 10 that is processed by the luminance information generation unit 53A. The second processed image is an image taken by the second camera 20 that is processed by the luminance information generation unit 53B. The correction process coefficient k that the image comparison unit 31 calculates by comparing the first processed image with the second processed image is outputted to the image magnification conversion unit 150.

The image magnification conversion unit 150 is disposed in a rear stage to the image comparison unit 31 and to the luminance information generation unit 53B. An image processing unit according to the third embodiment is the image magnification conversion unit (image magnification conversion unit 150) that converts a magnification of the second image, using the correction process coefficient k. To the image magnification conversion unit 150, the correction process coefficient k from the image comparison unit 31 is inputted, and the second processed image from the luminance information generation unit 53B is inputted as well. The image magnification conversion unit 150 converts the magnification of the second processed image, using the correction process coefficient k. The image magnification conversion unit 150 outputs the second processed image having its magnification converted, to the parallax image generation unit 60.

The parallax image generation unit 60 generates a parallax image for detecting the parallax of the object, based on the first processed image inputted from the luminance information generation unit 53A and on the second processed image having its magnification converted that is inputted from the image magnification conversion unit 150.

The distance calculation unit 70 calculates a distance to the object, based on the parallax image generated by the parallax image generation unit 60.

Now, for example, a case where projection by the lens is central projection (ftanθ) is considered. In this case, a projection is not changed by neither the distortion conversion processing unit 50A nor the distortion conversion processing unit 50B. Thus, the first image outputted from the first camera 10 and the first processed image processed by the luminance information generation unit 53A are the same. Similarly, the second image outputted from the second camera 20 and the second processed image processed by the luminance information generation unit 53B are the same. Therefore, each image described in the third embodiment is in the same state as each image described in the first embodiment is, which leads to an understanding that the second processed image can be corrected by a correction algorithm according to the third embodiment.

Other types of projection will then be considered. For example, a case where a projection method executed by the lens is orthogonal projection (fsinθ) will be considered. In this case, projective transformation into central projection (ftanθ) is carried out on the first image detected by the first camera 10 and the second image detected by the second camera 20. For example, when image height displacement amounts of the first image and the second image are indicated as the characteristics shown in (1) of FIG. 4, image height displacement amounts of the first processed image and the second processed image are indicated as the characteristics shown in (1) of FIG. 9. This leads to an understanding that the second processed image can be corrected by the correction algorithm according to the third embodiment.

While central projection and orthogonal projection have been described in the third embodiment, the same effects can be obtained also by adopting stereoscopic projection, equistereoscopic angle projection, or equidistant projection that has distortion characteristics between distortion characteristics of central projection and orthogonal projection. The image magnification conversion unit 150 of this embodiment may have the same function as that of the distortion conversion processing unit 50 and may convert a distortion of the second processed image. The distortion conversion processing unit 50B may have the same function as that of the image magnification conversion unit 150 and may convert a magnification of the second image.

According to the image processing device 1B of the third embodiment described above, the correction process coefficient k is calculated, based on a result of comparison between the first processed image and the second processed image outputted from the luminance information generation units 53A and 53B, and the magnification of the second processed image is converted by the image magnification conversion unit 150. According to the image processing device 1 of the first embodiment, after the image comparison unit 30 calculates the correction process coefficient k, the distortion conversion processing unit 50B corrects a distortion by the second lens 21 and a magnification change of the second image. The image processing device 1B of the third embodiment, however, is different from the image processing device 1 of the first embodiment in that only the magnification of the second processed image is corrected, the second processed image being the second image whose distortion has already been converted. Because of this, in the image processing device 1B, for example, even when the first camera 10, the second camera 20, and the functional units 50 to 53 are integrally configured, the process of the distortion conversion processing unit 50B does not need to be changed.

[Fourth Embodiment]

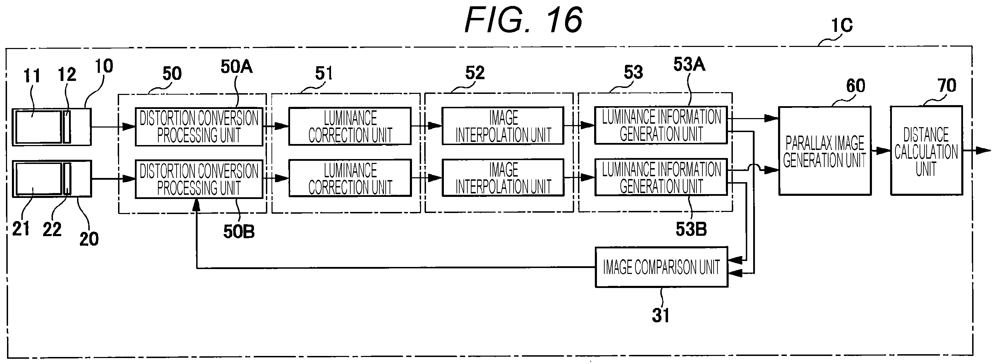

FIG. 16 is a block diagram showing an example of an internal configuration of an image processing device 1C according to a fourth embodiment of the present invention. In the third embodiment, the image comparison unit 31 compares the first processed image with the second processed image, and the image magnification conversion unit 150 converts an image magnification of the second processed image, based on a comparison result.

In contrast, the image processing device 1C of the fourth embodiment dispenses with the image magnification conversion unit 150, and is configured to output a comparison result from the image comparison unit 31 to the distortion conversion processing unit 50B.

The image processing device 1C of the fourth embodiment is configured to include the functional units included in the image processing device 1B of the third embodiment, except the image magnification conversion unit 150.

The image comparison unit 31 is disposed in a rear stage to the luminance information generation units 53A and 53B in the same manner as in the image processing device 1B shown in FIG. 15. The image comparison unit (image comparison unit 31) calculates the correction process coefficient k, based on the first image (i.e., first processed image) at least whose distortion has been converted and on which luminance information has been generated and on the second image (i.e., second processed image) at least whose distortion has been converted and on which luminance information has been generated. The image comparison unit 31 then calculates the correction process coefficient k, based on the first processed image and the second processed image outputted from the distortion conversion processing unit 50B and the image magnification conversion unit 150, and outputs the correction process coefficient k to the distortion conversion processing unit 50B.

An image processing unit according to the fourth embodiment is the distortion conversion processing unit (distortion conversion processing unit 50B) that converts a distortion of the first image and a distortion of the second image and that converts a magnification of the second image, using the correction process coefficient k. The distortion conversion processing unit 50B converts the distortion of the second image detected by the second camera 20, and corrects a magnification change of the second image, based on the correction process coefficient k inputted from the image comparison unit 31. Other processes to follow are the same as those of the image processing device 1 of the first embodiment.

For example, the parallax detection unit (parallax image generation unit 60) detects a parallax of an object reflected in the first image and in the second image, based on the first image (i.e., first processed image) at least whose distortion has been converted and on which luminance information has been generated and on the second image (i.e., second processed image) at least whose distortion has been converted, on which luminance information has been generated, and whose magnification has been converted. The parallax image generation unit 60 generates a parallax image for detecting the parallax of the object, using the first processed image inputted from the luminance information generation unit 53A and the second processed image having its magnification converted by the distortion conversion processing unit 50B, the second processed image being inputted from the luminance information generation unit 53B.

The distance calculation unit 70 calculates a distance to the object, based on the parallax image generated by the parallax image generation unit 60.

According to the configuration of the image processing device 1C of the fourth embodiment described above, a magnification change of the second image resulting from a temperature change of the two lenses can be corrected. At this time, the correction process coefficient k of the distortion conversion processing unit 50B is changed, based on a result of comparison between the first image and the second image by the image comparison unit 31, and a difference in image height between the first image and the second image is eliminated. As a result, a parallax of each object that is generated by the parallax image generation unit 60 is accurately obtained, and the distance to the object calculated by the distance calculating unit 70 is accurately calculated as well.

According to the image processing device 1C of the fourth embodiment, the image comparison unit 31 calculates the correction process coefficient k, based on the first processed image and the second processed image. As a result, a magnification change of the second image outputted from the distortion conversion processing unit 50B is corrected. If the second processed image having its magnification change corrected is subjected to processes in rear stages and then is inputted to the image comparison unit 31 as the second processed image, the image comparison unit 31 calculates the correction process coefficient k that does not correct the magnification change of the second image. To avoid this, once the image comparison unit 31 calculates the correction process coefficient k, the image comparison unit 31 stops executing its process for a certain period. After the certain period passes, the image comparison unit 31 restarts its process.

It should be noted that the present invention is not limited to the embodiments described above. Obvious to say, the present invention may be embodied in various applications and modifications other than the embodiments, proving that such applications and modifications do not depart from the substance of the present invention that is described in the claims.

For example, in each embodiment described above, the configuration of the image processing device is described specifically in detail to facilitate understanding of the present invention, and the embodiment is not necessarily limited to one that includes all configurations described above. Some constituent elements of one embodiment described above may be replaced with constituent elements of another embodiment, and a constituent element of another embodiment may be added to a constituent element of one embodiment. In addition, some of constituent elements of each embodiment can be deleted therefrom or add to or replaced with constituent elements of another embodiment.

A group of control lines/information lines considered to be necessary for description are illustrated, and all control lines/information lines making up the product are not necessarily illustrated. It is safe to assume that, actually, almost the entire constituent elements are interconnected.

In the above-described embodiments, the process of correcting a magnification change resulting from a temperature change of the lens has been described. Even in a case where magnifications of two cameras change with time, the same effect as an effect of the process is achieved.

In the above-described embodiments, the process of converting both a magnification in the horizontal direction and a magnification in the vertical direction of an image has been described. Even in a case where an image processing device according to a modification converts a magnification only in the horizontal direction in which a parallax is detected, the same effect as an effect of the process according to the above-described embodiment is achieved. In this case, the image processing unit (distortion conversion processing unit 50) corrects the second image at least in the first direction. In other words, even if the magnification in the direction in which the parallax is detected is converted, the same effect as an effect of the process according to the above-described embodiments is achieved.

The image processing device of each of the above-described embodiments can carry out an image correction process in real time. In addition, the image processing device of each of the above-described embodiments may correct an image, based on, for example, temperature information or time information, or may monitor MES to detect its shift of a given amount and correct the image at a point of time at which MES shifts by the given amount.

Reference Signs List

| | |
|---|---|
| 1 | image processing device |
| 10 | first camera |
| 11 | first lens |
| 12 | first image sensor |
| 20 | second camera |
| 21 | second lens |
| 22 | second image sensor |
| 30 | image comparison unit |
| 50A, 50B | distortion conversion processing unit |
| 51 | luminance correction unit |
| 52 | image interpolation unit |
| 53 | luminance information generation unit |
| 60 | parallax image generation unit |
| 70 | distance calculation unit |
| 100 | object |

**Claims**

1. An image processing device comprising:

   an image comparison unit that compares a first image detected by a first image sensor built in a first camera with a second image detected by a second image sensor built in a second camera, the first image and the second image being inputted from a stereo camera including the first camera and the second camera lined up in a first direction, and that calculates a correction process coefficient for correcting the second image, based on a difference between the first image and the second image in a second direction different from the first direction; and
   an image processing unit that corrects the second image, using the correction process coefficient calculated by the image comparison unit.

2. The image processing device according to claim 1, wherein

the image comparison unit defines a difference between a displacement amount of an image in an area where the first image extends in the second direction and a displacement amount of an image in an area where the second image extends in the second direction, as a difference between the first image and the second image, and wherein the image processing unit calculates the correction process coefficient that is a magnification for carrying out correction for eliminating a difference in the displacement amount in the area where the second image extends in the second direction.

3. The image processing device according to claim 1, wherein

the image comparison unit defines a difference between an image size in a partial area of the first image extending in the second direction and an image size in a partial area of the second image extending in the second direction, as a difference between the first image and the second image, and wherein the image processing unit calculates the correction process coefficient that is a magnification for carrying out correction for eliminating a difference in the image size in the partial area of the second image.

4. The image processing device according to claim 2, wherein the image processing unit corrects the second image that develops a difference with the first image as a result of a time-dependent change in a detection magnification of the first camera and in a detection magnification of the second camera.

5. The image processing device according to claim 2, wherein the image processing unit corrects the second image that develops a difference with the first image as a result of a change in a temperature of the first camera and in a temperature of the second camera.

6. The image processing device according to claim 5, wherein the image processing unit corrects the second image that develops a difference with the first image due to a difference between a sensitivity of a first image sensor built in the first camera and a sensitivity of a second image sensor built in the second camera, the difference between the sensitivities resulting from a change in a temperature of the first camera and in a temperature of the second camera.

7. The image processing device according to claim 2, wherein the image comparison unit detects a difference in the displacement amount, based on a difference between a position of an object reflected in the first image and a position of an object reflected in the second image.

8. The image processing device according to claim 2, wherein the image comparison unit detects a difference in the displacement amounts, using a plurality of areas of the first image that correspond to an optical axis of a first lens of the first camera and a plurality of areas of the second image that correspond to an optical axis of a second lens of the second camera.

9. The image processing device according to claim 2, wherein the image processing unit corrects the second image at least in the first direction.

10. The image processing device according to claim 2, wherein

the image processing unit is a distortion conversion processing unit that converts a distortion of the first image and a distortion of the second image, and wherein the image processing device comprises a parallax detection unit that detects a parallax between an object reflected in the first image and an object reflected in the second image, based on the first image at least whose distortion has been converted and on which luminance information has been generated and on the second image at least whose distortion has been converted, on which luminance information has been generated, and whose magnification has been converted.

11. The image processing device according to claim 2, wherein

the image processing unit is an image magnification conversion unit that converts a magnification of the second image having its distortion converted, using the correction process coefficient, and wherein

the image processing device comprises a parallax detection unit that detects a parallax between an object reflected in the first image and an object reflected in the second image, based on the first image at least whose distortion has been converted and on which luminance information has been generated and on the second image at least whose distortion has been converted, on which luminance information has been generated, and whose magnification has been converted.

12. The image processing device according to claim 2, wherein

the image processing unit is an image magnification conversion unit that converts a magnification of the second image, using the correction process coefficient, wherein
the image comparison unit calculates the correction process coefficient, based on the first image at least whose distortion has been converted and on which luminance information has been generated and on the second image at least whose distortion has been converted and on which luminance information has been generated, and wherein
the image processing device comprises a parallax detection unit that detects a parallax between an object reflected in the first image and an object reflected in the second image, based on the first image whose distortion has been converted and on which luminance information has been generated and on the second image whose distortion has been converted, on which luminance information has been generated, and whose magnification has been converted.

13. The image processing device according to claim 2, wherein

the image processing unit is a distortion conversion processing unit that converts a distortion of the first image and a distortion of the second image and that converts a magnification of the second image, using the correction process coefficient, wherein
the image comparison unit calculates the correction process coefficient, based on the first image at least whose distortion has been converted and on which luminance information has been generated and on the second image at least whose distortion has been converted and on which luminance information has been generated, and wherein
the image processing device comprises a parallax detection unit that detects a parallax between an object reflected in the first image and an object reflected in the second image, based on the first image at least whose distortion has been converted and on which luminance information has been generated and on the second image at least whose distortion has been converted, on which luminance information has been generated, and whose magnification has been converted.

14. An image processing method comprising:

a step of comparing a first image detected by a first image sensor built in a first camera with a second image detected by a second image sensor built in a second camera, the first image and the second image being inputted from a stereo camera including the first camera and the second camera lined up in a first direction, and calculating a correction process coefficient for correcting the second image, based on a difference between the first image and the second image in a second direction different from the first direction; and
a step of correcting the second image, based on the correction process coefficient calculated.

*FIG. 1*

(1) IMAGE ON SENSOR

(2) IMAGE HAVING BEEN SUBJECTED TO CORRECTION PROCESS

*FIG. 2*

$$S(+\theta) = dy1 - dy2$$
$$= dy1 - k \times dy2$$

$$S(-\theta) = -(dy1 - dy2)$$
$$= -(dy1 - k \times dy2)$$

*FIG. 3*

EP 4 632 321 A1

IMAGE HEIGHT
DISPLACEMENT AMOUNT
(VERTICAL DIRECTION)

S11

S12

VERTICAL ANGLE
OF VIEW

(1)

DIFFERENCE IN IMAGE HEIGHT
DISPLACEMENT AMOUNT
(VERTICAL DIRECTION)

S(+$\theta$)

$-\theta$

$\theta$

VERTICAL ANGLE
OF VIEW

S(-$\theta$)

(2)

*FIG. 4*

IMAGE HEIGHT
DISPLACEMENT AMOUNT
(VERTICAL DIRECTION)

S11

SC1

S12

VERTICAL ANGLE
OF VIEW

(3)

DIFFERENCE IN IMAGE HEIGHT
DISPLACEMENT AMOUNT
(VERTICAL DIRECTION)

$-\theta$

$\theta$

VERTICAL ANGLE
OF VIEW

(4)

MAGNIFICATION
ERROR SIGNAL
(MES)
$S(+\theta)-S(-\theta)$

*FIG. 5*

MES > 0

MES = 0

CORRECTION PROCESS
COEFFICIENT k
(MAGNIFICATION)

MES < 0

OPTIMUM
VALUE

FIG. 6

IMAGE HEIGHT
DISPLACEMENT AMOUNT
(VERTICAL DIRECTION)

S11

S22

VERTICAL ANGLE
OF VIEW

(1)

DIFFERENCE IN IMAGE HEIGHT
DISPLACEMENT AMOUNT
(VERTICAL DIRECTION)

S(+$\theta$)

$-\theta$

$\theta$

VERTICAL ANGLE
OF VIEW

S($-\theta$)

(2)

FIG. 7

IMAGE HEIGHT
DISPLACEMENT AMOUNT
(VERTICAL DIRECTION)

S11

SC2

S22

VERTICAL ANGLE
OF VIEW

(3)

DIFFERENCE IN IMAGE HEIGHT
DISPLACEMENT AMOUNT
(VERTICAL DIRECTION)

$-\theta$

$\theta$

VERTICAL ANGLE
OF VIEW

(4)

IMAGE HEIGHT
DISPLACEMENT AMOUNT
(VERTICAL DIRECTION)

S11

S32

S12

VERTICAL ANGLE
OF VIEW

(1)

DIFFERENCE IN IMAGE HEIGHT
DISPLACEMENT AMOUNT
(VERTICAL DIRECTION)

S(+θ)

-θ

θ

VERTICAL ANGLE
OF VIEW

S(-θ)

(2)

*FIG. 8*

IMAGE HEIGHT
DISPLACEMENT AMOUNT
(VERTICAL DIRECTION)

S11

SC1

SC3

S32

S12

VERTICAL ANGLE
OF VIEW

(3)

DIFFERENCE IN IMAGE HEIGHT
DISPLACEMENT AMOUNT
(VERTICAL DIRECTION)

VERTICAL ANGLE
OF VIEW

-θ

θ

(4)

IMAGE HEIGHT
DISPLACEMENT AMOUNT
(VERTICAL DIRECTION)

S41

S42

VERTICAL ANGLE
OF VIEW

(1)

DIFFERENCE IN IMAGE HEIGHT
DISPLACEMENT AMOUNT
(VERTICAL DIRECTION)

$S(+\theta)$

$-\theta$

$\theta$

VERTICAL ANGLE
OF VIEW

$S(-\theta)$

(2)

*FIG. 9*

IMAGE HEIGHT
DISPLACEMENT AMOUNT
(VERTICAL DIRECTION)

SC4

S41

S42

VERTICAL ANGLE
OF VIEW

(3)

DIFFERENCE IN IMAGE HEIGHT
DISPLACEMENT AMOUNT
(VERTICAL DIRECTION)

$-\theta$

$\theta$

VERTICAL ANGLE
OF VIEW

(4)

FIG. 10

# FIG. 11

<u>200</u>

FIG. 12

*FIG. 13*

START

S1
COMPARE FIRST IMAGE WITH SECOND IMAGE

S2
CONVERT DISTORTION OF FIRST IMAGE
AND DISTORTION OF SECOND IMAGE

S3
CONVERT MAGNIFICATION OF SECOND IMAGE

S4
CORRECT LUMINANCE OF FIRST IMAGE
AND LUMINANCE OF SECOND IMAGE

S5
INTERPOLATE FIRST IMAGE AND SECOND IMAGE

S6
GENERATE LUMINANCE INFORMATION ON
FIRST IMAGE AND LUMINANCE INFORMATION
ON SECOND IMAGE

S7
GENERATE PARALLAX IMAGE

S8
CALCULATE DISTANCE TO OBJECT

END

## FIG. 14

## FIG. 15

## FIG. 16

FIG. 16

# INTERNATIONAL SEARCH REPORT

| International application No. |
|---|
| **PCT/JP2023/032211** |

**A.    CLASSIFICATION OF SUBJECT MATTER**

*G01C 3/06*(2006.01)i; *G01C 3/00*(2006.01)i; *G06T 7/593*(2017.01)i
FI:    G01C3/06 110V; G01C3/00 120; G06T7/593

According to International Patent Classification (IPC) or to both national classification and IPC

**B.    FIELDS SEARCHED**

Minimum documentation searched (classification system followed by classification symbols)

G01C3/06; G01C3/00; G06T7/593

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2008-70120 A (HITACHI, LTD.) 27 March 2008 (2008-03-27)    paragraphs [0039]-[0040], [0044]-[0045], fig. 9, 11 | 1, 3, 14 |
| A | | 2, 4-13 |
| A | JP 2021-192492 A (CANON INC.) 16 December 2021 (2021-12-16)    entire text | 1-14 |
| A | JP 2016-218758 A (SONY INTERACTIVE ENTERTAINMENT LLC) 22 December 2016 (2016-12-22)    entire text | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032211**

| Patent document cited in search report | | | Publication date (day/month/year) | Patent family member(s) | | | Publication date (day/month/year) |
|---|---|---|---|---|---|---|---|
| JP | 2008-70120 | A | 27 March 2008 | (Family: none) | | | |
| JP | 2021-192492 | A | 16 December 2021 | US entire text | 2021/0385385 | A1 | |
| JP | 2016-218758 | A | 22 December 2016 | US entire text | 2018/0167607 | A1 | |
| | | | | WO | 2016/186031 | A1 | |
| | | | | EP | 3299937 | A1 | |
| | | | | CN | 107960123 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008241491 A
- JP 2012147281 A